Europäisches Patentamt

European Patent Office

Office européen des brevets

(19)

(11) Publication number: **0 373 108**
**A2**

## EUROPEAN PATENT APPLICATION

(12)

(21) Application number: **89810890.7**

(22) Date of filing: **21.11.89**

(51) Int. Cl.⁵: **D21C 9/10, C12S 3/08,**
**C12N 1/14, //(C12N1/14,**
**C12R1:645)**

(30) Priority: **23.11.88 US 276090**
**23.11.88 US 276081**

(43) Date of publication of application:
**13.06.90 Bulletin 90/24**

(84) Designated Contracting States:
**CH DE FR GB IT LI SE**

(71) Applicant: **SANDOZ AG**
**Lichtstrasse 35**
**CH-4002 Basel(CH)**
(84) **CH FR GB IT LI SE**

Applicant: **SANDOZ-PATENT-GMBH**
**Humboldtstrasse 3**
**D-7850 Lörrach(DE)**
(84) **DE**

(72) Inventor: **Blanchette, Robert A.**
**975 West County Road I**
**Shoreview Minnesota 55126(US)**
Inventor: **Brush, Theresa Scalzo**
**313 Katahdin Drive**
**Lexington, MA 02173(US)**
Inventor: **Farrell, Roberta Lee**
**177 Hobart Street**
**Danvers, MA 01923(US)**
Inventor: **Krisa, Keith Allan**
**58 Curtis Road**
**Somerville, MA 02144(US)**
Inventor: **Mishra, Chittra**
**98 Emerson Gardens**
**Lexington, MA 02173(US)**

(54) **Process for bleaching pulp.**

(57) The invention relates to a biological process for bleaching pulp or treating waste-water effluents e.g. E1 effluents using fungi such as white-rot fungi.

Xerox Copy Centre

## PROCESS FOR BLEACHING PULP

This invention relates to a new biological process for bleaching pulp using microorganisms such as bacteria or fungi e.g. white-rot, brown-rot or yeast-like fungi. Also disclosed is the use of a particular fungus for treating waste water effluents.

Wood is a complex material which is composed of cellulose, hemicellulose and lignin along with other minor components. The lignin is associated with and even covalently bound to a matrix of cellulose and hemicellulose. In paper making processes, lignin should be removed from the wood material since it reduces the strength, confers a brownish colour and imparts other undesirable characteristics to the finished product. Conventionally, wood chips are first treated with sodium sulphide ($Na_2S$) and sodium hydroxide (NaOH) to degrade lignin substantially. This is called the sulphate or Kraft process. Alternatively other treatments may be of use e.g. the sulphite process. The pulps obtained therefrom are called "chemical pulps".

Chemical pulp e.g. Kraft pulp usually contains about 4-12% by weight of residual lignin which gives the pulp a characteristic brown colour. At this stage of delignification, the Kappa number which reflects the lignin content of the pulp is usually from 10 to 45, more frequently from 12 to 40.

To further reduce the lignin content, pulp should be subjected to a series of chemical treatments commonly referred to as bleaching. Many industrial bleaching processes already exist but almost all of them include at least some of the following steps, in various orders:

• C Chlorination with chlorine (in an acidic medium)

$C_D$ Reaction with a mixture of chlorine and chlorine dioxide

D Reaction with chlorine dioxide (in an acidic medium)

E Alkaline extraction

$E_o$ Alkaline extraction in the presence of oxygen at an increased pressure

H Reaction with hypochlorite

P Reaction with a peroxide.

Most commonly, a bleaching process starts with a chlorine treatment followed by extraction of the chlorinated lignin compounds (C-E stage). In addition to this, a process also comprises 3 or 4 reactional steps which are necessary to obtain a pulp of a desired brightness level. A typical process consists of the CEHDED or CEDED sequence. (For further description of conventional bleaching process, see Smook, G.A. (1982) Handbook for pulp and paper technologists, TAPPI, Atlanta, GA.)

However, the chlorine treatment is highly undesirable because the effluents resulting from the C-E stage (called E-1 effluents) contain a very large number of chlorinated organic compounds which are hazardous for the environment e.g. chlorinated phenolics. Also, due to their highly corrosive nature, it is quite difficult to recycle the effluents. Thus, from the environmental point of view, it is clear that new techniques for bleaching which may reduce pollution, are highly desirable.

In nature, there exist a number of microorganisms which selectively delignify wood, and degrade and modify lignin. The enzymes involved in such a digestion belong to the classes of oxydases, peroxidases and hemicellulases. Attempts have been made to treat pulp with bacteria or fungi, such as white-rot fungi to reduce the lignin content of pulp.

Typically, a known biological process for bleaching pulp comprises diluting a pulp with water or a medium necessary for the growth of a microorganism to obtain a preparation conventionally at 3% pulp consistency (W/Vol) which is then inoculated with the microorganism and cultured.

The optimization of the experimental conditions in a biological bleaching process has, however, not yet been achieved. This remains a major challenge since a biological process must be able to compete with a chemical process on an industrial level. It has now been found that, surprisingly, very good results may be achieved in biologically delignifying wood pulp when treating the pulp with a microorganism at a high pulp consistency.

Thus the invention provides a process for bleaching pulp which comprises:

a) degrading the lignin content of pulp by culturing a bacterium or fungus within the pulp at a consistency of at least 7% and

b) removing the degraded lignin content from pulp.

By "bleaching process" as used herein is meant a process for improving the whiteness or brightness of wood pulp or both.

The term "degrading" as used herein with reference to lignin in pulp is meant to encompass any effect on lignin which results from the degradation or modification of lignin or hemicellulose by biological activity. Thus, lignin may be effectively dislodged from the hemicellulose matrix or rendered releasable.

2

By "lignin" as used herein is meant not only natural, unmodified forms but also the forms as found in chemically treated pulps which are, in whole or in part, chemically modified by various agents such as those used in the Kraft or sulphite pulping process.

By "biological treatment" is meant a pulp treatment using a culture of a microorganism e.g. a bacterium or a fungus.

Consistency of the pulp is determined by a standard procedure as the dry weight of pulp [(after drying for 2 to 10 hours at about 105°C (European standard) or after drying for about 2 hours at 60°C (US standard)] expressed in percentage of the total system measured in volume.

Preferably, the process of the invention is carried out at a pulp consistency above 10%, more preferably above 13%. Pulp consistency may be as high as possible as long as the fluid consistency of the medium is maintained. In practice, pulp consistency does not exceed 30%, preferably 27%, more preferably 25%. Optimal pulp consistency may vary from 10 to 30% depending upon the type of pulp to be treated e.g. hardwood or softwood pulp. Preferably, the pulp consistency ranges from 13 to 30%, more preferably from 13 to 25%. A most preferred range is from 13% to 20%.

In a very general way, the process of the invention may be carried out in a manner analogous to the conventional processes provided that the required consistency is met. Temperatures and pH conditions are advantageously those which enhance the growth of the microorganism used in the process. In practice, it is preferred to perform the process at a temperature from 15°C to 50°C, more preferably from 20°C to 40°C, most preferably from 25°C to 40°C. pH is suitably not above 7 and usually is in the range from 3 to 6, preferably from 4 to 5. Oxygen may also be provided to enhance the growth of the microorganism. The microorganism may be cultured onto pulp in the presence or absence of a growth medium, the first alternative being preferred. When a growth medium is mixed with the pulp, it advantageously contains a carbon source. Preferably, the carbon source is suitable for inducing or stimulating the production of lignin-degrading enzymes. For example, if the microorganism used in the process of the invention is a hemicellulase-producing strain and if the pulp to be treated is a hardwood pulp, it is advantageous to add a growth medium containing xylan-containing carbohydrates, e.g. xylan as carbon source, since these carbohydrates are inducers for the production of xylanase which is an hemicellulase particularly effective in releasing the lignin content of hardwood from its hemicellulose matrix. In a similar manner, if the pulp to be treated is a softwood pulp, then mannan-containing carbohydrates e.g. mannan or a mixture of mannan-containing carbohydrates and xylan-containing carbohydrates are preferably chosen as carbon source. Another example includes the use of a peroxidase-producing strain (peroxidases act on lignin). In this case, a suitable inducer may be e.g. veratryl alcohol which is a lignin model compound.

The process of the invention may be applied to a wide variety of wood pulps the residual lignin content of which shall be reduced. Unbleached wood pulps which may be treated with the process of the invention are advantageously thermomechanical pulps (TMP), chemimechanical pulps (CMP), chemithermomechanical pulps (CTMP) and chemical pulps (CP) such as sulphite and Kraft pulps, these latter being preferred.

Following the biological treatment, removal of the solubilized lignin from pulp may be carried out by washing, filtration or by extraction, preferably by extraction. Washing with e.g. water is preferably carried out at a temperature from 40°C to 80°C, more preferably at 60°C. Suitable extractants include, for example, bases such as alkali metal hydroxides alone or with hydrogen peroxide, dimethylformamide, dioxane, acetone and alcohol. A dilute aqueous sodium hydroxide extraction is generally preferred. A typical extraction step may be carried out at a pulp consistency from 3 to 20%, preferably from 5 to 15% at a temperature between 60 and 80°C. The final pH is above 10.8, preferably above 11, otherwise the removal of lignin is incomplete. Retention time may be from 30 minutes to 3 hours, preferably from 45 minutes to 2 hours.

For use in the process of the invention, the microorganism may be any bacterium or fungus which is naturally able to grow on wood. Such microorganisms usually secrete enzymes which attack the lignin or hemicellulose content of wood (lignin-degrading enzymes as defined in this application). For example, suitable microorganisms are strains which are able to produce oxidases, such as laccases; peroxidases such as ligninases or Mg-dependent peroxidases; or hemicellulases such as xylanases or mannanases. Xylanases are able to catalyse the hydrolysis of both hardwood and softwood hemicellulose which is a polymer of various polysaccharides especially xylans while mannanases catalyze the hydrolysis of mannan-containing carbohydrates, a major component of softwood hemicellulose. Of preferred use are strains which produce oxidases or peroxidases.

In nature, the enzymes cited above are generally produced upon induction with the corresponding substrate. Thus, in order to reduce the term of the treatment in the process of the invention it may be useful to treat the pulp with mutant strains which are deregulated for the synthesis of the enzymes of interest which are therefore produced constitutively. Such mutant strains are usually called "hyperproducer mutants".

Particularly preferred microorganisms are those which selectively degrade the lignin or hemicellulose content to the exclusion of the cellulose content of wood. Such preferred microorganisms generally do not produce cellulases or produce low amounts of cellulases which are not susceptible to damage the cellulose.

Fungi able to degrade lignin are usually found among white-rot, brown-rot and yeast-like fungi, preferably in the group of white-rot fungi. One species of yeast-like fungus is Aureobasidium pullulans, preferably strains Y-2311 and Y-2311-1, both of which being available from the NRRL Collection. White-rot fungi are of particular interest for pulp bleaching, especially Phanerochaete chrysosporium and Scystinostroma galactinum. Indeed, the bleaching activity of white rot fungi is enhanced at high pulp consistency.

While P. chrysosporium is well-known (various strains are available at the ATCC) and commonly used in biological treatment of pulp, S. galactinum is herein described for the first time as being useful for pulp bleaching. Thus, the invention also provides a process for bleaching pulp which comprises

a) degrading the lignin content of pulp by treating the pulp with a culture of Scytinostroma galactinum or an enzymatic system of S. galactinum and

b) removing the degraded lignin from pulp.

While, by "enzymatic system" is meant any kind of enzyme preparation, for example, those in a purified form or provided as a crude extract for a fungus culture, a preferred type is a supernatant obtained from a culture of S. galactinum.

It has also been found that S. galactinum is surprisingly effective in the treatment of waste stream effluents. Waste stream effluents are usually loaded with a large number of degradation products which impart to the effluents an opaque and coloured aspect. When such effluents are treated with a culture of S. galactinum then a significant decolorizing or brightening effect is achieved.

Accordingly, the invention also provides a process for upgrading a waste water effluent which comprises treating the effluent with a culture of S. galactinum.

While this process is suitable for treating any waste water effluent, it is of preferred use for treating effluents containing chlorine-containing compounds e.g. chloro-aromatic compounds. Of particular interest is the treatment of effluents discharged from pulp-making processes such as Kraft or sulphite process or from pulp bleaching. The process of the invention is especially adapted to upgrade the E1 effluents resulting from a chlorine bleaching treatment of the pulp.

S. galactinum strain F361 or a mutant thereof is a most preferred strain for use in the process of the invention for upgrading effluents. F361 has been deposited under the Budapest treaty on November 2, 1989 at the American type culture collection (ATCC) and given the deposit number ATCC 20966.

In a very general manner, an effluent may be treated as follows. The effluent, is added to a recipient which contains a mycelial culture of S. galactinum. Such a recipient is advantageously a fermentor suitably designed for culturing the fungus. The effluent may be added undiluted or diluted with water or a growth medium, preferably diluted with a growth medium for S. galactinum. Temperature and pH conditions of the process are advantageously those which enhance the growth of the fungus. Thus, temperatures are preferably from 15°C to 40°C, more preferably from 20°C to 35°C. The pH is suitably not greater than 7 and usually in the range of from 3 to 6, preferably from 4 to 5. The reaction system may also be continuously or periodically supplied with oxygen so that the oxygen is available to the fungus. Alternatively the contact of effluents with the fungal culture is intermittent so that the culture is exposed in sequence to the oxygen to the effluent.

For bleaching pulp or for treating waste water effluents, a preferred culture of S. galactinum is a composition comprising a culture grown in the presence of a compound which induces or stimulates the production of lignin-degrading enzymes by the fungus. Such inducers are for example, pure lignin; cellulosic lignin-containing materials e.g. wood chips or wood pulp; lignin degradation products especially those containing an aromatic ring; and lignin model compounds e.g. veratryl alcohol. It is also preferred to bleach pulp with a supernatant obtained from the above indicated cultures of S. galactinum.

The invention is further illustrated as follows:

## GENERAL PROCEDURES

A) Culture of a white-rot fungus (P. chrysosporium or S. galactinum)

4

## 1. Preparation of a mycelial suspension

The fungus is first grown in slant cultures on yeast Nitrogen Phosphate Dextrose (YNPD) agar pH 4.2. YNPD medium contains the following nutrients per liter of water: glucose, 10 g; malt extract, 10 g; peptone, 2 g; yeast extract, 2 g; asparagine, 1 g; $KH_2PO_4$, 2g; $MnSO_4 \cdot 7H_2O$, 1 g; thiamin-HCl, 1 mg. Growth occurs at room temperature in 3 to 4 weeks.

A mycelial suspension is prepared by diluting the slant culture with 100 ml sterilized deionized water, mixing well and filtering through sterilized cheese cloth.

## 2. Culture in liquid basal medium.

The basal growth medium is the nitrogen-limited BIII medium supplemented with 1% glucose, 0.4 mM veratryl alcohol and with 0.01 M transaconitric acid. pH is adjusted to 4.5. The nitrogen-limited BIII/glucose medium contains $1.08 \times 10^{-3}$ M ammonium tartrate, $1.47 \times 10^{-2}$ M $KH_2PO_4$, $2.03 \times 10_{-3}$ M $MgSO_4.7H_2O$, $6.8 \times 10^{-4}$ M $CaCl_2 \cdot 2H_2O$, $2.96 \times 10^{-6}$ M thiamine $\cdot$ HCl and 10 ml$\cdot$L$^{-1}$ of a trace element solution. The trace element solution contains $7.8 \times 10^{-3}$ M nitrilo-acetic acid, $1.2 \times 10^{-2}$ M $MgSO_4 \cdot 7HO_2$, $1.7 \times 10^{-2}$ M NaCl, $3.59 \times 10^{-4}$ M $FeSO_4 \cdot 7H_2O$, $7.75 \times 10^{-4}$ M $CoCl_2$, $9.0 \times 10^{-4}$ M $CaCl_2$, $3.48 \times 10^{-4}$ M $ZnSO_4$, $4 \times 10^{-5}$ M $CuSO_4 \cdot 5H_2O$, $2.1 \times 10^{-5}$ M $AlK(SO_4)_2 \cdot 12H_2O$, $1.6 \times 10^{-4}$ M $H_3BO_3$, $4.1 \times 10^{-5}$ M $NaMoO_4 \cdot 2H_2O$ and $2.9 \times 10^{-3}$ M $MnSO_4 \cdot H_2O$.

## B. Determination of Kappa number

The extent of delignification of the pulp may be indicated by the Kappa number as measured in a standard method described in TAPPI Test Methods (Tappi, Atlanta, Ga.) Vol. 1, 1988 "Kappa number of pulp - T 236 cm 85". The Kappa number is the volume (in millilitres) of 0.1N potassium permanganate solution consumed by one gram of moisture-free pulp (oven dried pulp; drying is carried out for 2 to 10 hours at about 105° C) under the conditions specified in the above method. The results are corrected to 50% consumption of the permanganate added. A lower Kappa number is desirable as it indicates that a smaller amount of lignin is present in pulp.

## Example 1: Bleaching of Kraft Pulp with F361

A series of stationary flask (250 ml) experiments are set up with F361 inoculated directly onto hardwood or softwood kraft pulps obtained from the Scott Paper Company. The pulps are washed in water and filter dried and samples are divided into two sets. The dry weight of the pulp is determined after drying for 2 hours at 60° C. To a first set, 20 ml of growth medium is mixed to the pulp. To the second set, only 20 ml of water is mixed to the pulp. After sterilization of the pulp mixtures, inoculation is effected by adding to the flasks identical agar cubes obtained from a YNPD slant culture of F361. The hardwood kraft pulp and the softwood experiments are respectively conducted at a pulp consistency of 23% and 9%. Control samples (no fungal inoculation) are also prepared in parallel with the test samples. By day 21 after the start of the culture, a very strong bleaching is observed in all test samples and on day 26, the samples are treated by a standard alkali extraction (2.5% aqueous sodium hydroxide at 60° C). Kappa numbers are then determined and the results are reported in the table below.

| Treated Kraft Pulp | Kappa Number | % Kappa Reduction |
|---|---|---|
| Softwood | | |
| Grown in medium | 6.2 | 64 |
| Grown in water | 5.6 | 67.6 |
| Control | 17.3 | |
| Hardwood | | |
| Grown in medium | 6.1 | 52 |
| Grown in water | 5.5 | 56.7 |
| Control | 12.7 | |

Example 2:

Example 1 is repeated except that the samples are extracted or washed with water on day 32 after the start of the culture. Kappa number of the samples are measured and are to be seen in the table below

| Treated Kraft Pulp | |
|---|---|
| Softwood | Kappa number |
| Softwood control & alkali extracted | 17.3 |
| Grown in medium & alkali extracted | 4.5 |
| Grown in medium & water washed | 9.4 |
| Grown in water & alkali extracted | 5.8 |
| Grown in water & water washed | 6.4 |
| Hardwood | Kappa number |
| Hardwood Control & alkali extracted | 12.7 |
| Grown in medium & alkali extracted | 6.5 |
| Grown in medium & water washed | 9.3 |
| Grown in water & and alkali extracted | 5.4 |
| Grown in water & water washed | 5.6 |

Example 3:

Northern softwood pine kraft pulp and Northern hardwood kraft pulp, both obtained from the Warren Sommerset Mill (Maine, U.S.A.) are each individually tested in a series of bleaching experiments using F361. The pulp is washed with deionized water and dried for 2.5 hours at 60° C. 5 g samples of dry pulp are distributed in polypropylene bags and different amounts of water are added to the bags to provide a duplicate series samples having a different pulp consistency. The bags are sealed, sterilized at 121° C for 35 minutes and then cooled to room temperature. The bags of a first series are then inoculated with similar agar cubes of F361 and agitated to distribute the fungal inoculum in the pulp (the other series being maintained as a control to which no inoculum is added). A sterilized pasteur pipet fitted with a small sterilized cotton plug is then inserted into each bag and the bag opening sealed around the pipet so that bags are then aerated through the pipet with pure oxygen. Bags are left to stand at room temperature. Each day during the experiment each bag is recharged with oxygen. After 19 days, pulp is recovered from each bag and both the treated samples and untreated control samples are extracted with 2.5% sodium hydroxide at 60°C. Kappa numbers are determined and are to be seen in the table below.

| Pulp Consistency (%) | | Kappa Number | |
|---|---|---|---|
| | | F361 Treated | Control |
| Softwood | 1 | 19.9 | 21.0 |
| | 3 | 16.8 | 19.7 |
| | 6 | 17.8 | 19.2 |
| | 9 | 13.7 | 18.9 |
| | 12 | 12.9 | 19.3 |
| | 15 | 7.3 | 20.5 |
| | 20 | 12.4 | 19.8 |
| Hardwood | 1 | 12.0 | 13.6 |
| | 3 | 12.5 | 13.1 |
| | 6 | 13.1 | 12.6 |
| | 9 | 10.5 | 12.7 |
| | 12 | 6.7 | 13.0 |
| | 15 | 6.9 | 13.9 |
| | 20 | 7.1 | 14.1. |

Example 4:

Example 3 is repeated except that northern softwood and hardwood kraft pulps are produced by the Warren Sommerset Mill (Maine, U.S.A.) at a different period of the year. Results are reported in the table below.

| Pulp Consistency (%) | | Kappa number | |
|---|---|---|---|
| | | F361-Treated | Control |
| Softwood | 9 | 4.3 | 15.7 |
| | 12 | 4.9 | 15.7 |
| | 15 | 5.6 | 15.7 |
| | 18 | 3.7 | 15:7 |
| | 21 | 4.6 | 15.7 |
| Hardwood | 3 | 12.4 | 20.8 |
| | 5 | 15.6 | 19.1 |
| | 6 | 12.9 | 18.2 |
| | 7 | 10.2 | 21.4 |
| | 9 | 7.9 | 19.8 |

Example 5:

Example 3 is repeated except that strain F361 is replaced by the P. chrysosporium strain BKM. The term of treatment is 16 days. The results are reported in the table below.

7

| Pulp Consistency (%) | | Kappa number | |
|---|---|---|---|
| | | BKM-Treated | Control |
| Softwood | 1 | 15.9 | 18.7 |
| | 3 | 9.6 | 21.0 |
| | 6 | 13.6 | 18.4 |
| | 9 | 11.1 | 19.8 |
| | 12 | 6.4 | 18.3 |
| | 15 | 4.4 | 18.9 |
| | 20 | 3.9 | 18.3 |
| Hardwood | 1 | 9.6 | 14.4 |
| | 3 | 7.9 | 14.3 |
| | 6 | 9.9 | 14.1 |
| | 9 | 7.3 | 12.4 |
| | 12 | 5.7 | 13.6 |
| | 15 | 5.6 | 13.5 |

Example 6:

Stationary flask cultures are grown in basal medium in which glucose has been replaced by xylan, mannan or both and supplemented with sterilized softwood or hardwood kraft pulp at 4.5% or 16.5% consistency. The experiments are as follows:

An inoculum is prepared by mixing 10 ml of a mycelial suspension of F361 (obtained from a stationary flask culture) with 90 ml of the basal medium modified as follows: veratryl alcohol is omitted and the final glucose concentration is 0.4% rather than 1%. The modified basal medium is also supplemented with 1% E1 effluent from hardwood pulp bleaching and with 0.25% xylan or with 1% E1 effluent from softwood pulp bleaching and with 0.5% mannan, depending whether the inoculum destinated to grow on hardwood or softwood pulp, respectively. The inoculum is skaked for 4 days before use.

A first series of samples at 4.5% pulp consistency is prepared by mixing 5 g of dry hardwood or softwood pulp, 10 ml of a suitable inoculum and 100 ml of the basal medium modified as above indicated. The samples are supplemented or not with 1 g xylan (if the pulp is a hardwood pulp), 1 g mannan (if the pulp is a softwood pulp), or with 0.5 g xylan and 0.5 g mannan (if the pulp is a softwood pulp).

A second series of samples is prepared as above except that pulp consistency is adjusted to 16.5% using 20 ml of the modified basal medium 2-fold concentrated rather than 100 ml of the modified basal medium.

On day 15 and day 50 from the start of the culture, Kappa number of the pulps are measured and are to be seen in the tables below:

| Kappa numbers measured after 15-day incubation | | | | |
|---|---|---|---|---|
| Series | Hardwood pulp | | Softwood pulp | |
| Consistency | 4.5% | 16.5% | 4.5% | 16.5% |
| No extra carbon sources | 13.3 | 10.3 | 23.5 | 17.9 |
| Plus Mannan | | | 21.5 | 17.4 |
| Plus Mannan | 13.9 | 14.5 | - | - |
| Plus Mannan and Xylan | - | - | 22.1 | 16.4 |
| Control | 15 | 15 | 22 | 22 |

8

| Kappa numbers measured after 50-day incubation | | | | |
|---|---|---|---|---|
| Series | Hardwood pulp | | Softwood pulp | |
| Consistency | 4.5% | 16.5% | 4.5% | 16.5% |
| No extra carbon sources | 7 | 5.2 | 9.8 | 6.1 |
| Plus Mannan | | | 12 | 5.1 |
| Plus Mannan | 12 | 10.8 | - | - |
| Plus Mannan and Xylan | - | - | 13.2 | 4.7 |
| Control | 15 | 15 | 22 | 22 |

Example 7:

A culture of F361 in a Rotating Biological Contactor (RBC) is prepared as follows:

An RBC containing 2 l of basal medium is inoculated with about 200 ml of a mycelial suspension of F361. Incubation is carried out at room temperature (20-25° C) whilst rotating at one revolution per min. The culture is aerated 3 or 4 times per week by flooding the airspace over the culture with pure oxygen. The medium is changed about once a month. One month after the inoculation, the culture starts to grow onto discs.

Example 8:

One volume of an E1 effluent obtained from hardwood pulp bleaching is diluted with 3 volumes of the basal medium. This dilution is adjusted to pH 4.5 with HCl, sterilized at 121° C for 30 minutes and cooled at room temperature. 2 l of this preparation is poured into a Rotating Biological Contactor which already contains a mycelium of F361 grown as described in Example 7. Incubation is carried out at room temperature, whilst rotating at one revolution per minute. The decolorization of the effluent is indicated by the decrease in absorbance monitored at 465 nm. Results are as follows:

| Hour(s) | A465 nm | |
|---|---|---|
| | 0 | 0.717 |
| | 1 | 0.595 |
| | 2 | 0.535 |
| | 3 | 0.485 |
| | 4 | 0.464 |
| | 5 | 0.445 |
| | 6 | 0.421 |
| | 7 | 0.399 |
| | 8 | 0.381 |
| | 9 | 0.375 |
| | 14 | 0.320 |
| | 30 | 0.255 |
| | 73 | 0.175 |

Example 9:

Example 8 is repeated using E1 effluent from softwood pulp bleaching. Incubation is carried out for 11 days in an RBC which has already been exposed to hardwood E1 effluent for 32 days as described in Example 8 (the mixture growth medium/hardwood E1 effluent is removed before starting the present experiment. The culture is aerated as previously described in Example 7. Decolorization is monitored by measuring the absorbance at 465 nm. Results are as follows:

| time (days) | A465 nm | % Absorbance decrease |
|---|---|---|
| 0 | 2.486 | - |
| 1 | 1.266 | 49 |
| 11 | 0.848 | 66 |

Example 10:

2 grams (dry weight) of northern hardwood kraft pulp are washed with deionized water and then filter dried. Sodium citrate buffer (50mM, pH 4.8) and xylanase (100 units per gram of dry pulp) are added to give a pulp consistency of 10%. Samples are incubated at room temperature for 7 days. The samples are then extracted with 2.5% (w/v) NaOH for 90 minutes at 60°C and washed with deionized water to neutral pH. A control sample (no addition of xylanase) is prepared and run using the same procedure.

Kappa number for the control sample is 14.4. Kappa number for the pulp sample enzymatically treated is 11.4.

**Claims**

1. A process for bleaching pulp which comprises:
a) degrading the lignin content of pulp by culturing a bacterium or a fungus within the pulp at a consistency of at least 7% and
b) removing the degraded lignin from pulp.

2. A process according to claim 1 in which the pulp consistency is at least 10%.

3. A process according to claim 1 or 2 in which the pulp consistency is at least 13%.

4. A process according to any one of claims 1 to 3 in which the pulp consistency is from 13 to 30%.

5. A process according to any one of claims 1 to 4 in which the pulp consistency is from 13 to 20%.

6. A process according to any one of claims 1 to 5 comprising culturing a fungus which is a white-rot or yeast-like fungus.

7. A process according to any one of claims 1 to 6 in which the fungus is Phanerochaete chrysosporium.

8. A process according to any one of claims 1 to 6 in which the fungus is Scytinostroma galactinum.

9. A process according to any one of claims 1 to 6 in which the fungus is Aureobasidium pullulans.

10. A process according to any one of claims 1 to 9 in which the pulp is a chemical pulp.

11. A process for bleaching pulp which comprises:
a) degrading the lignin content of pulp by treating the pulp with a culture of Scytinostroma galactinum or an enzymatic system of S. galactinum and
b) removing the degraded lignin from pulp.

12. A process according to claim 11 which comprises culturing S. galactinum within the pulp.

13. A process for upgrading a waste water effluent which comprises treating the effluent with a culture of Scytinostroma galactinum.

14. A process according to claim 13 in which the effluent comprises a chlorine-containing compound.

15. A process according to claim 14 in which the effluent is an E1 effluent.

16. A process according to any one of claims 11 to 15 in which S. galactinum is the strain F361 or a mutant thereof.

17. A process according to any one of claims 12 to 16 which comprises culturing S. galactinum in the presence of added oxygen.

18. S. galactinum strain F361 (ATCC 20966)